# EUROPÄISCHE PATENTSCHRIFT

(11) **EP 0 387 621 B1**
(45) Veröffentlichungstag und Bekanntmachung des Hinweises auf die Patenterteilung: **23.06.1993**
(21) Anmeldenummer: 90103997.4
(22) Anmeldetag: 01.03.1990
(51) Int. Cl.: A01C 15/00, B65G 33/24

(54) **Drillmaschinenverbund**
Seeddrill connection
Connexions de semoirs

(30) Priorität: 11.03.1989 DE 3907934
(43) Veröffentlichungstag der Anmeldung: 19.09.1990
(73) Patentinhaber: Amazonen-Werke H. Dreyer GmbH & Co. KG, D-49205 Hasbergen (DE)
(72) Erfinder: Siefken, Claus, D-2875 Ganderkesee 1 (DE)

(56) Entgegenhaltungen:
- DE-A- 3 735 126
- US-A- 4 338 872
- US-A- 4 562 779

## Beschreibung

Die Erfindung betrifft einen Drillmaschinenverbund gemäß des Oberbegriffes des Anspruches 1.

Ein derartiger Drillmaschinenverbund wird in der landwirtschaftlichen Praxis zur Bearbeitung größerer Arbeitsbreiten eingesetzt, wobei sich die größere Arbeitsbreite in einfachster Weise durch das Nebeneinanderanordnen von Drillmaschinen mit bezogen auf die Gesamtarbeitsbreite der Drillmaschinenverbundes halber Arbeitsbreite ergibt, d.h., durch das Nebeneiananderanordnen von zwei Drillmaschinen mit einer jeweiligen Arbeitsbreite von beispielsweise 3 m an einem vorlaufenden Rahmen läßt sich so ein Drillmaschinenverbund mit einer Arbeitsbreite von 6 m erreichen, Die Drillmaschinen sind jeweils mittels zweier beabstandeter Unterlenker und einem Oberlenker an dem vorlaufenden Rahmen beweglich angelenkt, so daß sie sich beispielsweise eventuellen Bodenunebenheiten sehr gut anpassen können, Die Vorratsbehälter der Drillmaschinen werden jeweils einzeln von der Rückseite befüllt, wobei jeweils eine gleichmäßige Befüllung über die gesamte Arbeitsbreite erfolgen muß.

Der Erfindung liegt nun die Aufgabe zugrunde, auf einfache Weise eine Befülleinrichtung für zwei in einem Geräteverbund nebeneinander angeordnete Drillmaschinen zu schaffen, welche gegeneinander bewegbar an einem vorlaufenden Tragrahmen angeordnet sind.

Diese Aufgabe wird erfindungsgemäß durch die kennzeichnenden Maßnahmen des Anspruches 1 gelöst.

Infolge dieser Maßnahmen lassen sich die Vorratsbehälter der zwei nebeneinander angeordneten Drillmaschinen auf einfachste Weise von einer zentralen Befüllstation mit Saatgut befüllen. Diese Befüllstation läßt sich dann beispielsweise einfach von einem das Saatgut transportierenden Anhänger befüllen. Die Anordnung eines elastischen Verbindungsschlauches zwischen den beiden Drillmaschinen ermöglicht, daß die Bewegungsfreiheit der beweglich an dem vorlaufenden Rahmen angelenkten Drillmaschinen nicht eingeschränkt wird. Außerdem ergibt sich eine gleichmäßige Befüllung der beiden Vorratsbehälter durch die Befülleinrichtung, wobei der Saatguttransport des Saatgutes in den elastischen Verbindungsschlauch mittels der in dem einen Vorratsbehälter angeordneten Befüllschnecke erfolgt und daß in den Verbindungsschlauch von der einen Befüllschnecke transporterte Saatgut von der in dem anderen Vorratsbehälter angeordneten Befüllschnecke abgezogen wird.

In einer Ausführungsform erfolgt der Antrieb für beide in den Vorratsbehältern der Drillmaschinen angeordneten Befüllschnecken über einen zentralen Antrieb, hierbei ist dann erfindungsgemäß vorgesehen, daß die sich in beiden Vorratsbehältern befindlichen Befüllschnecken über eine bewegliche Verbindung, beispielsweise über eine Gelenkwelle, welche aus zwei gegeneinander verschiebbaren Teilen mit Kreuzgelenken besteht, verbunden sind. Diese Verbindung der beiden Befüllschnecken miteinander gewährleistet die Beweglichkeit der Drillmachinen gegeneinander.

Damit auch in dem elastischen Verbindungsschlauch der Befülleinrichtung eine Zwangsförderung des zu fördernden Materiales realisierbar ist, ist erfindungsgemäß vorgesehen, daß auf dem außenliegenden Verschieberohr der Gelenkwelle Schneckengänge befestigt sind.

In einer weiteren Ausführungsform sind die beiden starren, im oberen Bereich der Vorratsbehälter der nebeneinander angeordneten Drillmaschinen sich befindlichen Schnecken erfindungsgemäß durch eine flexible Schnecke miteinander verbunden. Hierbei dient die flexible Schnecke gleichzeitig als Förder- und Antriebsorgan.

Bei der Ausbildung der Drillmaschinen jeweils mit einer zentralen Befülleinrichtung ist erfindungsgemäß vorgesehen, daß die Befülleinrichtung aus auf den normalen Drillmaschinenkästen aufgesetzten Erweiterungsbehältern besteht.

Die erfindungsgemäße Ausführungsform sieht weiterhin vor, daß der elastische Füllschlauch mindestens den 1,5 fachen Durchmesser wie die Befüllschnecken aufweist.

In einer anderen Ausführungsform ist erfindungsgemäß vorgesehen, daß die in jedem Drillmaschinenbehälter angeordnete Befüllschnecke über einen eigenen Antrieb angetrieben wird.

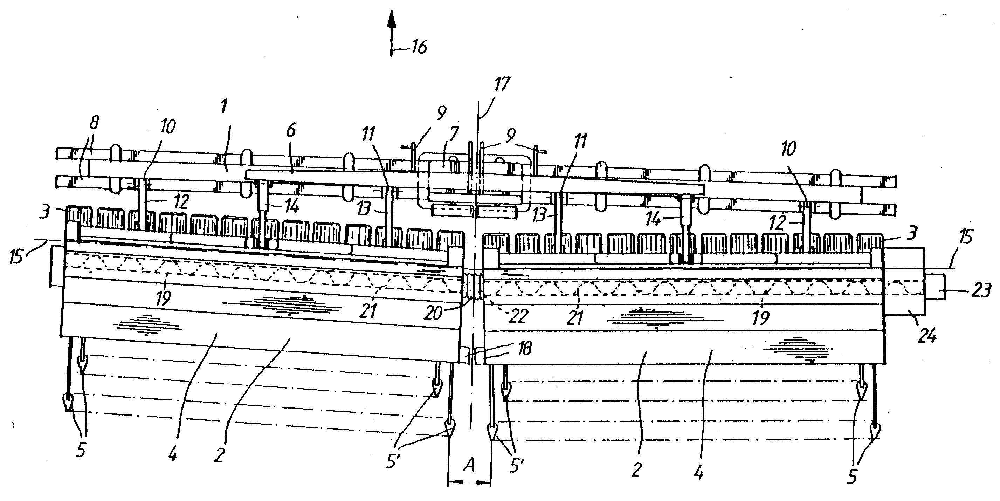

Weitere Einzelheiten der Erfindung sind der Beispielsbeschreibung und der Zeichnung zu entnehmen. Hierbei zeigt die Zeichnung
die erfindungsgemäße Anordnung der zentralen Befülleinrichtung in den Vorratsbehältern der nebeneinander angeordneten Drillmaschinen.

Der Drillmaschinenverbund besteht aus den zwei an dem als Bodenbearbeitungsgerät 1 ausgebildeten vorlaufenden Rahmen zusammengekuppelten und nebeneinander angeordneten Drillmaschinen 2. Der Drillmaschinenverbund stellt durch die Ausbildung des als Bodenbearbeitungsgerät 1 ausgebildeten Tragrahmens eine geschlossene Gerätekombination dar. Diese geschlossene Gerätekombination besteht aus dem vorlaufenden, als Rüttelegge ausgebildeten Bodenbearbeitungsgerät 1 und den zwei dahinter angeordneten Drillmaschinen 2, die etwa die halbe Arbeitsbreite wie das vorlaufende Bodenbearbeitungsgerät 1 aufweisen. Die Drillmaschinen 2 sind als Nachlaufgeräte ausgebildet und weisen jeweils die Nachlaufwalze 3 auf, die als bekannter Reifenpacker ausgebildet ist und das Fahrwerk für die Drillmaschinen 2 bildet. Auf jeder dieser Nachlaufwalzen 3 ist jeweils die Drillmaschine 2 mit dem Vorratsbehälter 4 und den nachgeordneten Säscharen 5 aufgesattelt.

Das Bodenbearbeitungsgerät 1 weist den Rahmen 6 auf, an dem die über das Getriebe 7 oszillierend angetriebenen Zinkenbalken 8, an dem die Bodenbearbeitungswerkzeuge angeordnet sind, gelagert sind. Das Getriebe 7 der Rüttelegge 1 wird über eine nicht dargestellte Gelenkwelle von der Zapfwelle des die Gerätekombination transportierenden Ackerschleppers angetrieben, wobei die Gerätekombination mittels der Dreipunktkupplungselemente 9 an dem Dreipunktkraftheber des die Gerätekombination transportierenden Ackerschleppers angelenkt ist, so daß die gesamte Gerätekombination von dem Ackerschlepper ausgehoben werden kann.

An dem Rahmen 6 des Bodenbearbeitungsgerätes 1 sind die Anlenkpunkte 10 und 11 jeweils für die zwei beabstandeten Unterlenker 12 und 13 befestigt. Mittels der Unterlenker 12 und 13 und des Oberlenkers 14 ist jede Drillmaschine 2 an dem Bodenbearbeitungsgerät 1 angekoppelt. Die Unterlenker 12 und 13 wirken jeweils mit am Bodenbearbeitungsgerät 1 angeordneten Anschlägen zusammen, so daß sich über die jeweilige Nachlaufwalze 3 die Arbeitstiefe der an den Zinkenbalken 8 angeordneten Bodenbearbeitungswerkzeuge einstellen läßt.

Der äußere Unterlenker 12 ist jeweils kürzer ausgebildet als der innere Unterlenker 13. Durch die unterschiedlich lange Ausbildung der Unterlenker 12 und 13 wird erreicht, daß die durch die auf den Boden abrollenden Räder der Nachlaufwalzen 3 verlaufenden Drehachsen 15 der Gerätekombination in der dargestellten Position, die mit der Ruheposition vergleichbar ist, nicht miteinander fluchten, sondern einen auf der in Fahrtrichtung 16 zugewandten Seite in der Draufsicht gesehen einen stumpfen Winkel miteinander einschliessen, so daß die Drillmaschinen 2 das Bestreben haben, zur Maschinenmitte 17 zu laufen.

Wird die Gerätekombination nun in Fahrtrichtung 16 während des Arbeitseinsatzes über das Feld gezogen, erfolgt eine gewisse Ausrichtung der Drillmaschinen 2, wobei sich der in der Draufsicht gesehen stumpfe Winkel, welcher zwischen den Drehachsen 15 der Nachlaufgeräte 2 nun eingeschlossen ist, vergrößert, so daß die Drehachsen 15 der Drillmaschinen 2 annähernd miteinander fluchten.

Dadurch, daß die Nachlaufgeräte 2 mit einem Vorlauf zur Maschinemitte 17 hin hinter dem Bodenbearbeitungsgerät 1 angeordnet sind, lassen sich die Fertigungstoleranzen der einzelnen miteinander zusammenwirkenden Kupplungsteile ausgleichen. Durch die Ausbildung der unterschiedlich langen Unterlenker 12 und 13, die zur Einstellung eines gewissen Vorlaufes der Nachlaufgeräte 2 gegenüber dem Bodenbearbeitungsgerät 1 dienen, wird verhindert, daß die Nachlaufgeräte 2 beim Feldeinsatz von der Maschinenmitte 17 weglaufen. Dadurch, daß die Nachlaufgeräte 2 zur Maschinenmitte 17 hinlaufen, verringert sich auch der Abstand A zwischen den in Maschinenmitte 17 angeordneten Säscharen 5′ derart, daß der Abstand A in etwa dem Abstand benachbarter Säschare 5 der hinter den Drillmaschinen 2 angeordneten Säschare 5 entspricht und sich somit keine große unbesäte Lücke im Bereich der Maschinenmitte 17 ergibt. Damit die beiden nebeneinander hinter dem Bodenbearbeitungsgerät 1 angeordneten Nachlaufgeräte 2 sich im mittleren Bereich bei dem seitlichen Berühren nicht beschädigen, sind in diesem Bereich die Dämpfungs- und Gleitelemente 18 angeordnet. Eine unabhänige Höhenbeweglichkeit beider Drillmaschinen 2 gegeneinander ist gewährleistet, so daß sich die Drillmaschinen 2 Bodenunebenheiten exakt anpassen können.

Die an dem vorlaufenden Bodenbearbeitungsgerät 1 zu einem Drillmaschinenverbund nebeneinander angeordneten Drillmaschinen 2 sind mit der zentralen Befülleinrichtung 19 ausgesattet, wobei sich zwischen den beiden Drillmaschinen 2 der elastische Verbindungsschlauch 20 der Befülleinrichtungen 19 befindet. Die Befülleinrichtung 19 besteht aus der horizontal verlaufenden Befüllschnecke 21 welche sich jeweils im oberen Bereich des Vorratsbehälters 4 der Drillmaschinen 2 befindet. Die Befüllschnecken 21 reichen bis annähernd in den elastischen Befüllschlauch 20 hinein. Die beiden Befüllschnecken 21 sind in Maschinenmitte 17 mittels der beweglichen Verbindung 22, beispielsweise über eine Gelenkwelle antriebsgemäß miteinander verbunden. Der Antrieb der Befüllschnecke 21 erfolgt über den zentralen Antrieb 23, der beispielsweise von einem Hydraulikantrieb oder von einer Gelenkwelle angetrieben wird. Die Beschickung der Befüllschnecken 21 erfolgt vom zentralen Einfüllbehälter 24 von dem aus das zu fördernde Material in die Vorratsbehälter 4 der Drillmaschinen gleichmäßig verteilt wird.

## Patentansprüche

1. Drillmaschinenverbund, bestehend aus zwei an einem vorlaufenden Rahmen (6) zusammengekuppelten und nebeneinander angeordneten Drillmaschine (2) mit jeweils einem Vorratsbehälter (4), dadurch gekennzeichnet, daß der Drillmaschinen verbund (2) eine zentrale Befülleinrichtung (19), bestehend aus zwei horizontal verlaufenden Befüllschnecken (21) und einem elastischen Verbindungsschlauch (20), aufweist, daß je eine der zwei Befüllschnecken (21) jeweils in einem Vorratsbehälter (4) angeordnet ist und zumindest annähernd bis in den elastischen verbindungsschlauch (20) hineinreicht, welcher zwischen den beiden Vorratsbehältern (4) angeordnet ist.

2. Drillmaschinenverbund nach Anspruch 1, dadurch gekennzeichnet, daß die Befülleinrichtung (19) sich im oberen Bereich der Vorratsbehälter (4) befindet.

3. Drillmaschinenverbunden, dadurch gekennzeichnet, daß die sich in beiden Vorratsbehältern (4) befindlichen Befüllschnecken (21) über eine bewegliche Verbindung (22), beispielsweise über eine Gelenkwelle, welche aus zwei gegeneinander verschiebbaren Teilen mit Kreuzgelenken besteht, verbunden sind.

4. Drillmaschinenverbund nach Anspruch 3, dadurch gekennzeichnet, daß auf dem außen liegenden Verschiebungsrohr der Gelenkwelle Schneckengänge befestigt sind.

5. Drillmaschinenverbund nach Anspruch 1, daß die beiden starren Schnecken durch eine flexible Schnecke (21) verbunden sind.

6. Drillmaschinenverbund nach Anspruch 1, dadurch gekennzeichnet, daß der elastische Füllschlauch (20) mindestens den 1,5 fachem Durchmesser der Schnecken (21) aufweist.

7. Drillmaschinenverbund nach einem oder mehreren der vorgenannten Ansprüche, dadurch gekennzeichnet, daß die in jedem Drillmaschinenvorratsbehälter (4) angeordnete Befüllschnecke (21) über einen eigenen Antrieb (23) angetrieben wird.

8. Drillmaschinenverbund nach Anspruch 1, dadurch gekennzeichnet, daß die Befülleinrichtung (19) in auf den normalen Drillmaschinenkästen (4) aufgesetzten Erweiterungsbehältern angeordnet ist.

## Claims

1. Interconnected arrangement of drills, including two drills (2), which are interconnected on an advancing frame (6) and are disposed adjacent each other, each of said drills being provided with a hopper (4), characterised in that the interconnected arrangement of drills (2) has a central filler means (19) comprising two horizontally extending filler screw conveyors (21) and a flexible connecting tube (20), and in that each of the two filler screw conveyors (21) is disposed in a hopper (4) and extends at least approximately into the flexible connecting tube (20), which is disposed between the two hoppers (4).

2. Interconnected arrangement of drills according to claim 1, characterised in that the filler means (19) is disposed in the upper region of the hoppers (4).

3. Interconnected arrangement of drills, characterised in that the filler screw conveyors (21), situated in the two hoppers (4), are connected by a displaceable connection (22), for example, by a universally jointed shaft, which connection comprises two parts which are provided with universal joints and are displaceable relative to each other.

4. Interconnected arrangement of drills according to claim 3, characterised in that conveyor screw threads are secured on the externally situated displacement pipe of the universally jointed shaft.

5. Interconnected arrangement of drills according to claim 1, characterised in that the two rigid screw conveyors are connected by means of a flexible screw conveyor (21).

6. Interconnected arrangement of drills according to claim 1, characterised in that the flexible filler tube has a diameter which corresponds to at least 1.5 times the diameter of the screw conveyors (21).

7. Interconnected arrangement of drills according to one or more of the preceding claims, characterised in that the filler screw conveyor (21), which is disposed in each drill hopper (4), is driven by its own drive means (23).

8. Interconnected arrangement of drills according to claim 1, characterised in that the filler means (19) is disposed in extension containers mounted on the conventional drill boxes (4).

## Revendications

1. Combinaison de semoirs composée de deux semoirs (2) juxtaposés et réunis à un châssis (6) en amont, chaque semoir ayant un réservoir d'alimentation (4), combinaison (2), caractérisée en ce qu'elle comporte un dispositif central de remplissage (19) formé de deux vis de remplissage (21) horizontales et d'un tuyau élastique de liaison (20), chacune des deux vis de remplissage (21) étant associée à un réservoir d'alimentation (4) et arrive au moins approximativement jusque dans le tuyau de liaison élastique (20) prévu entre les deux réservoirs d'alimentation (4).

2. Combinaison de semoirs selon la revendication 1, caractérisée en ce que le dispositif de remplissage (19) se trouve dans la partie supérieure des réservoirs d'alimentation (4).

3. Combinaison de semoirs, caractérisée en ce que les deux vis de remplissage (21) qui se trouvent dans les réservoirs d'alimentation (4) sont reliées par une liaison mobile (22) par exemple un arbre à cardan composé de deux parties coulissantes l'une par rapport à l'autre avec des cardans.

4. Combinaison de semoirs selon la revendication 3, caractérisée en ce que des filets de vis sont prévus sur le tube coulissant extérieur de l'arbre à cardan.

5. Combinaison de semoirs selon la revendication 1, caractérisée en ce que les deux vis rigides sont reliées par une vis souple (21).

6. Combinaison de semoirs selon la revendication 1, caractérisée en ce que le tuyau de remplissage (20) élastique a un diamètre égal à au moins 1,5 fois le diamètre de la vis (21).

7. Combinaison de semoirs selon une ou plusieurs des revendications précédentes, caractérisée en ce que la vis de remplissage (21) prévue dans le réservoir d'alimentation (4) de chaque semoir est équipée d'un moyen d'entrainement (23) propre.

8. Combinaison de semoirs selon la revendication 1, caractérisé en ce que le dispositif de remplissage (19) comporte des extensions de réservoir montées sur les caissons normaux des réservoirs (4) des semoirs.
